# DEMANDE DE BREVET EUROPEEN

(11) **EP 1 204 024 A2**
(43) Date de publication de la demande: **08.05.2002**
(21) Numéro de dépôt: 01402836.9
(22) Date de dépôt: 02.11.2001
(51) Int. Cl.: G06F 9/44

(54) **Procédé d'exploitation d'un système d'aide et d'assistance sur ordinateur**

(30) Priorité: 02.11.2000 FR 0014224
(71) Demandeur: Viguie, Pascal, 34920 Le Cres (FR)
(72) Inventeur: Viguie, Pascal, 34920 Le Cres (FR)

(57) **Abrégé**

L'invention concerne un procédé d'exploitation d'un système d'aide et d'assistance sur ordinateur du genre mettant en oeuvre un ordinateur du type comportant essentiellement un microprocesseur (CPU), une mémoire vive (RAM), un disque dur (DD), un clavier (CL), une souris (SR), un moniteur (MO) et un système d'exploitation de type "enfenêtré", et destiné aux logiciels comportant au moins une interface utilisateur.

Le procédé selon l'invention se caractérise en ce qu'il consiste :
1) dans le cas d'une création d'une tâche, à stocker, dans la mémoire vive (RAM), les informations concernant le contrôle sur lequel l'utilisateur a agi, en capturant ainsi l'événement au niveau des messages traités par le microprocesseur (CPU), via les périphériques des types souris (SR) et clavier (CL) puis à transférer lesdites informations de la mémoire vive (RAM) vers un fichier stocké sur le disque dur (DD) ;
2) dans le cas du lancement d'une tâche, à transférer les informations, concernant les contrôles intervenant dans cette tâche, situées dans le fichier stocké sur le disque dur (DD), vers la mémoire vive (RAM) puis à afficher à l'écran (MO), l'aide étant activée, un curseur en mouvement, se comportant comme le curseur de l'utilisateur.

## Description

L'invention est relative à un procédé d'exploitation d'un système d'aide et d'assistance sur ordinateur.
Ledit procédé d'exploitation utilise au moins :
- un ordinateur du type comportant essentiellement un microprocesseur, une mémoire vive, un disque dur, un clavier, une souris, un moniteur ;
- un système d'exploitation de type "enfenêtré" ;
et est destiné aux logiciels comportant au moins une interface utilisateur.

L'aide en informatique se présente principalement sous la forme de rubriques d'aide (document de type page web, comportant parfois des images, des schémas ou des liens hypertextes) destinées à décrire les fonctionnalités de l'application qui intéressent l'utilisateur.
Elle existe également sous la forme de message texte ponctuel, détaillant le contrôle de l'interface du logiciel, dont l'utilisateur souhaite avoir des informations comme notamment à quoi il correspond concrètement.
En ce qui concerne l'assistance utilisateur, elle se limite essentiellement à la création d'un nouveau document où l'on peut ainsi configurer tel ou tels modèles avec telle ou telles options.
L'inconvénient majeur est que les utilisateurs de logiciels informatiques, plus ou moins expérimentés, utilisent rarement l'aide pour trouver ce qu'ils cherchent à réaliser. Car globalement l'aide décrit ce que peut faire l'application, et non comment l'utiliser.
Mais aussi parce que les informations contenues dans les rubriques d'aide sont plus ou moins techniques et que les utilisateurs ne sont pas sensés comprendre.

Le nouveau concept, selon l'invention, fournit aux utilisateurs une aide destinée à décrire comment utiliser un logiciel pour les moins expérimentés et une assistance évoluée pour les plus expérimentés.
Lorsqu'un utilisateur cherche à réaliser une tâche, il lui suffit de trouver la phrase correspondant à son attente (via une interface utilisateur) et de lancer la tâche qui y est associée. Un curseur se met alors à se déplacer tout seul et à réaliser la tâche comme si quelqu'un prenait la souris pour lui montrer comment s'y prendre.
De plus, l'utilisateur pourra, suivant la manière dont a été créée la tâche, paramétrer les états de certains contrôles, comme notamment choisir d'activer telle option ou de sélectionner telle chaîne de caractères plutôt qu'une autre, et cela quelle que soit l'étape dans laquelle il se trouve. Ce qui est en fait une assistance très performante, basée sur un principe simple : tout ce qui peut être fait par un utilisateur (en agissant ou en modifiant l'état de certains contrôles) peut être fait par programmation.
Pour enregistrer une tâche, il suffit de lancer la création d'une tâche (via une interface utilisateur), et de réaliser la tâche que l'on souhaite proposer aux utilisateurs avant de la stocker et de configurer notamment la phrase qui y sera associée.
Une option destinée à répéter une tâche, tout en faisant évoluer les paramètres de certains contrôles, ajoutera une fonctionnalité aux logiciels supportant ce type d'aide et permettra aux utilisateurs d'automatiser une tâche répétitive.

Le procédé d'exploitation selon l'invention se caractérise essentiellement en ce qu'il consiste :
1 - dans le cas d'une création d'une tâche, à stocker, dans la mémoire vive de l'ordinateur, les informations concernant le contrôle sur lequel l'utilisateur a agi, en capturant l'événement au niveau des messages traités par le microprocesseur, puis à transférer lesdites informations de la mémoire vive de l'ordinateur vers un fichier stocké sur le disque dur ;
2 - dans le cas du lancement d'une tâche, à transférer les informations concernant les contrôles intervenant dans cette tâche stockés sur disque dur vers la mémoire vive de l'ordinateur puis à afficher à l'écran du moniteur, l'aide et l'assistance étant activées, un curseur en mouvement, se comportant comme le curseur de l'utilisateur, déclenchant l'événement associé au contrôle, en cours de traitement et, suivant l'état du contrôle, si celui-ci comporte un état pouvant être paramétré, par rapport à la répétition en cours.

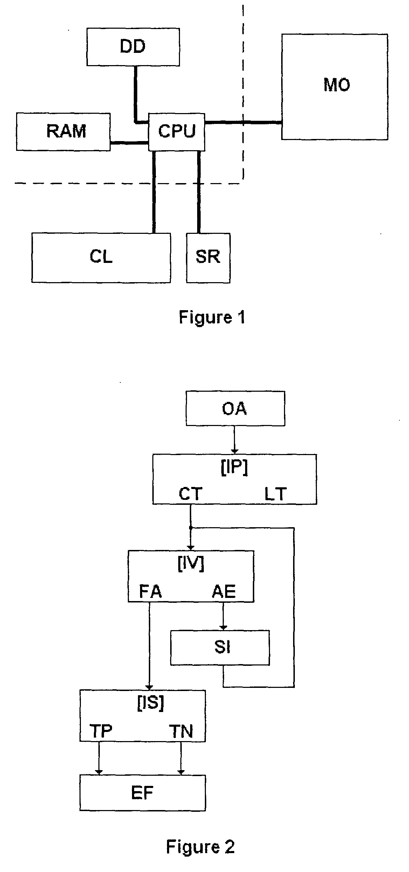

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.
Sur ces dessins
- la figure 1 est une vue schématique des sous-ensembles d'un ordinateur sollicités par la mise en oeuvre du procédé selon l'invention ;
- la figure 2 est un organigramme de fonctionnement du protocole de création d'une tâche ;

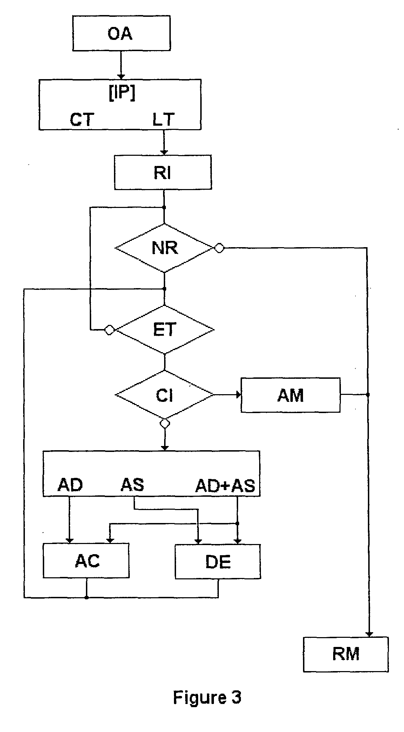

- la figure 3 est un organigramme de fonctionnement du protocole de lancement d'une tâche suivant la configuration de l'utilisateur.

Le procédé d'exploitation d'un système d'aide et d'assistance sur ordinateur est du genre mettant en oeuvre :
- un ordinateur du type comportant essentiellement un microprocesseur (CPU), une mémoire vive (RAM), un disque dur (DD), un clavier (CL), une souris (SR), un moniteur (MO) ;
- un système d'exploitation de type "enfenêtré" ;
et destiné aux logiciels du type comportant au moins une interface utilisateur.

Selon les caractéristiques essentielles de l'invention, le procédé en question consiste :
1) dans le cas d'une création d'une tâche :
   a) à stocker, dans la mémoire vive (RAM), les informations concernant le contrôle (SI) sur lequel l'utilisateur a agi, en capturant l'événement au niveau des messages traités par le microprocesseur (CPU), à savoir : l'identifiant du contrôle, le type de contrôle, l'état du contrôle si celui-ci comporte un état pouvant être paramétré, l'identifiant de l'événement émis par ledit contrôle, et ce tant que l'utilisateur souhaite ajouter un événement à la tâche (AE), en manipulant les contrôles de l'interface du logiciel, via les périphériques des types souris (SR) et clavier (CL) ;
   b) à transférer lesdites informations (EF) de la mémoire vive (RAM) vers un fichier stocké sur le disque dur (DD) ;
2) dans le cas du lancement d'une tâche :
   a) à transférer les informations (RI), concernant les contrôles intervenant dans cette tâche, situées dans le fichier stocké sur le disque dur (DD), vers la mémoire vive (RAM), à savoir : la liste des identifiants des contrôles constituant la tâche, la liste des identifiants des événements associés aux contrôles constituant la tâche, la liste des messages associés à chacun des contrôles constituant la tâche dans le cas où il serait désactivé ou invisible et, dans le cas d'une tâche non paramétrable (TN), la liste des états des contrôles constituant la tâche, si ces derniers comportent un état pouvant être paramétré, par rapport au nombre de répétitions (NR) ;
   b) à afficher à l'écran (MO), l'aide étant activée (AD), un curseur en mouvement, se comportant comme le curseur de l'utilisateur (AC), agissant sur le contrôle déclenchant l'événement en cours de traitement et, suivant l'état du contrôle, si celui-ci comporte un état pouvant être paramétré, par rapport à la répétition en cours et, l'assistance étant activée, à déclencher l'événement (DE) associé au contrôle en cours de traitement et, suivant son état, si celui-ci comporte un état pouvant être paramétré, stocké en mémoire (RAM), par rapport à la répétition en cours.

Selon des caractéristiques additionnelles de l'invention, le procédé en question consiste, dans le cas d'une création d'une tâche :
◆ avant la phase a) précédente, à ouvrir l'aide (OA) via le logiciel et à lancer la création d'une tâche (CT) fermant ainsi l'interface principale (IP) et démarrant l'interface de validation (IV) ;
◆ après la phase a) et avant la phase b) précédentes :
   - à valider l'enregistrement de la tâche ainsi réalisée, via l'interface de validation (IV), dès que l'utilisateur a terminé d'y ajouter des événements (FA), fermant ainsi l'interface de validation (IV) et déclenchant l'ouverture de l'interface serveur (IS) ;
   - à configurer, via l'interface serveur (IS), la phrase associée à la tâche ainsi créée stockée en mémoire (RAM) : l'état des contrôles stockés en mémoire (RAM) si ces derniers comportent un état pouvant être paramétré ; le message de chacun des contrôles à afficher, dans le cas où il serait désactivé ou invisible, stocké en mémoire (RAM) ; et, dans le cas d'une création d'une tâche paramétrable (TP), la description, le type et la limite des paramètres des états des contrôles, si ces derniers comportent un état pouvant être paramétré, stockés en mémoire (RAM).

Selon d'autres caractéristiques additionnelles de l'invention, le procédé en question consiste, dans le cas du lancement d'une tâche :
◆ avant la phase a) précédente :
   - à ouvrir l'aide (OA) via le logiciel ;
   - à choisir une des tâches parmi les phrases proposées et à la configurer (IP) selon les options suivantes : activation ou non de l'aide (AD) placée en mémoire (RAM), activation ou non de l'assistance (AS) placée en mémoire (RAM), définition du nombre de fois que l'utilisateur souhaite répéter la tâche (NR) placée en mémoire (RAM), et, dans le cas d'une tâche paramétrable (TP), définition des états des contrôles, si ces derniers comportent un état pouvant être paramétré, par rapport au nombre de répétitions (NR) définies préalablement par l'utilisateur, placée en mémoire (RAM) ;
   - à lancer la tâche (LT) fermant ainsi l'interface principale (IP) ;
◆ après la phase a) précédente, à vérifier que le contrôle associé à l'événement en cours de traitement (ET) est activé et visible (Cl) et, dans ce cas, à enchaîner à la phase b) précédente ;
◆ après la phase a) précédente, à vérifier que le contrôle associé à l'événement en cours de traitement (ET) est activé et visible (Cl) et, dans le cas contraire, à afficher le message (AM) associé au contrôle à l'écran (MO) et à rendre la main à l'utilisateur (RM) ;
◆ après la phase b) précédente, à rendre la main à l'utilisateur (RM) une fois qu'il n'y a plus d'événements à traiter (ET) et que la tâche a été répétée autant de fois que le nombre de répétitions (NR).

L'ouverture de l'aide (OA) se fait via le logiciel au moyen d'un menu ou d'un bouton en faisant appel à une interface principale (IP). Elle permet à l'utilisateur de configurer certaines options avant de lancer une tâche (LT) et assure la création d'une nouvelle tâche (CT).
Une tâche est constituée d'événements associés aux contrôles de l'interface du logiciel et constituant ainsi une de ses fonctionnalités. Lorsqu'un utilisateur cherche à réaliser une opération qu'il ne sait pas accomplir, il lui suffit d'ouvrir l'aide (OA), de trouver la phrase correspondante à son attente (IP) et de lancer la tâche (LT) qui y est associée. Suivant la configuration (AD+AS), un curseur se met alors à réaliser la tâche (AC+DE) comme si un utilisateur expérimenté prenait la souris pour lui montrer comment s'y prendre.
L'utilisateur pourra également paramétrer les états des contrôles, si ces derniers comportent un état pouvant être paramétré, associés aux événements constituant la tâche, dans le cas d'une tâche paramétrable (TP), avec une option destinée à répéter une tâche (NR), et permettant ainsi aux utilisateurs d'automatiser une tâche répétitive tout en faisant évoluer lesdits états.
Pour créer une tâche (CT), après avoir ouvert l'aide (OA) et lancé la création d'une tâche (CT), une interface de validation apparaît (IV) laissant la possibilité à l'utilisateur de manipuler le logiciel (CL+SR) afin d'ajouter des événements à la tâche qu'il souhaite enregistrer (AE). Une fois terminé, il valide l'enregistrement via l'interface de validation (IV) faisant ainsi appel à une autre interface de configuration : l'interface serveur (IS). Cette interface lui permettra, entre autres, de créer la phrase qui sera associée à la tâche et de configurer certains points, comme notamment, la création d'une tâche paramétrable (TP) ou non paramétrable (TN).

## Revendications

1. Procédé d'exploitation d'un système d'aide et d'assistance sur ordinateur du genre mettant en oeuvre :
- un ordinateur du type comportant essentiellement un microprocesseur (CPU), une mémoire vive (RAM), un disque dur (DD), un clavier (CL), une souris (SR), un moniteur (MO) ;
- un système d'exploitation de type "enfenêtré" ;
et destiné aux logiciels comportant au moins une interface utilisateur ;
**caractérisé en ce qu'**il consiste :
1) dans le cas d'une création d'une tâche :
a) à stocker, dans la mémoire vive (RAM), les informations concernant le contrôle (SI) sur lequel l'utilisateur a agi, en capturant ainsi l'événement au niveau des messages traités par le microprocesseur (CPU), à savoir : l'identifiant du contrôle, le type de contrôle, l'état du contrôle si celui-ci comporte un état pouvant être paramétré, l'identifiant de l'événement émis par ledit contrôle, et ce tant que l'utilisateur souhaite ajouter un événement à la tâche (AE), en manipulant les contrôles de l'interface du logiciel, via les périphériques des types souris (SR) et clavier (CL) ;
b) à transférer lesdites informations (EF) de la mémoire vive (RAM) vers un fichier stocké sur le disque dur (DD) ;
2) dans le cas du lancement d'une tâche :
a) à transférer les informations (RI), concernant les contrôles intervenant dans cette tâche, situées dans le fichier stocké sur le disque dur (DD), vers la mémoire vive (RAM), à savoir : la liste des identifiants des contrôles constituant la tâche, la liste des identifiants des événements associés aux contrôles constituant la tâche, la liste des messages associés à chacun des contrôles constituant la tâche dans le cas où il serait désactivé ou invisible et, dans le cas d'une tâche non paramétrable (TN), la liste des états des contrôles constituant la tâche, si ces derniers comportent un état pouvant être paramétré, par rapport au nombre de répétitions (NR) ;
b) à afficher à l'écran (MO), l'aide étant activée (AD), un curseur en mouvement, se comportant comme le curseur de l'utilisateur (AC), agissant sur le contrôle déclenchant l'événement en cours de traitement et, suivant l'état du contrôle, si celui-ci comporte un état pouvant être paramétré, par rapport à la répétition en cours et, l'assistance étant activée, à déclencher l'événement (DE) associé au contrôle en cours de traitement et, suivant son état, si celui-ci comporte un état pouvant être paramétré, stocké en mémoire (RAM), par rapport à la répétition en cours.

2. Procédé d'exploitation, selon la revendication 1, **caractérisé en ce qu'**il consiste, dans le cas d'une création d'une tâche, avant la phase a) précédente, à ouvrir l'aide (OA) via le logiciel et à lancer la création d'une tâche (CT) fermant ainsi l'interface principale (IP) et démarrant l'interface de validation (IV).

3. Procédé d'exploitation, selon la revendication 1, **caractérisé en ce qu'**il consiste, dans le cas d'une création d'une tâche, après la phase a) et avant la phase b) précédentes :
◆ à valider l'enregistrement de la tâche ainsi réalisée, via l'interface de validation (IV), dès que l'utilisateur a terminé d'y ajouter des événements (FA), fermant ainsi l'interface de validation (IV) et déclenchant l'ouverture de l'interface serveur (IS) ;
◆ à configurer, via l'interface serveur (IS), la phrase associée à la tâche ainsi créée stockée en mémoire (RAM) : l'état des contrôles stockés en mémoire (RAM) si ces derniers comportent un état pouvant être paramétré ; le message de chacun des contrôles à afficher, dans le cas où il serait désactivé ou invisible, stocké en mémoire (RAM) ; et, dans le cas d'une création d'une tâche paramétrable (TP), la description, le type et la limite des paramètres des états des contrôles, si ces derniers comportent un état pouvant être paramétré, stockés en mémoire (RAM).

4. Procédé d'exploitation, selon la revendication 1, **caractérisé en ce qu'**il consiste, dans le cas du lancement d'une tâche, avant la phase a) précédente :
◆ à ouvrir l'aide (OA) via le logiciel ;
◆ à choisir une des tâches parmi les phrases proposées et à la configurer (IP) selon les options suivantes : activation ou non de l'aide (AD) placée en mémoire (RAM), activation ou non de l'assistance (AS) placée en mémoire (RAM), définition du nombre de fois que l'utilisateur souhaite répéter la tâche (NR) placée en mémoire (RAM), et, dans le cas d'une tâche paramétrable (TP), définition des états des contrôles, si ces derniers comportent un état pouvant être paramétré, par rapport au nombre de répétitions (NR) définies préalablement par l'utilisateur, placée en mémoire (RAM) ;
◆ à lancer la tâche (LT) fermant ainsi l'interface principale (IP).

5. Procédé d'exploitation, selon la revendication 1, **caractérisé en ce qu'**il consiste, dans le cas du lancement d'une tâche, après la phase a) précédente, à vérifier que le contrôle associé à l'événement en cours de traitement (ET) est activé et visible (Cl) et, dans ce cas, à enchaîner à la phase b) précédente.

6. Procédé d'exploitation, selon la revendication 1, **caractérisé en ce qu'**il consiste, dans le cas du lancement d'une tâche, après la phase a) précédente, à vérifier que le contrôle associé à l'événement en cours de traitement (ET) est activé et visible (Cl) et, dans le cas contraire, à afficher le message (AM) associé au contrôle à l'écran (MO) et à rendre la main à l'utilisateur (RM).

7. Procédé d'exploitation, selon la revendication 1, **caractérisé en ce qu'**il consiste, dans le cas du lancement d'une tâche, après la phase b) précédente, à rendre la main à l'utilisateur (RM) une fois qu'il n'y a plus d'événements à traiter (ET) et que la tâche a été répétée autant de fois que le nombre de répétitions (NR).
